# EUROPEAN PATENT APPLICATION

(11) **EP 2 465 582 A2**
(43) Date of publication of application: **20.06.2012**
(21) Application number: 11193009.5
(22) Date of filing: 12.12.2011
(51) Int. Cl.: A62B 5/00, E06C 5/00

(54) **UAV-delivered deployable descent device**

(30) Priority: 15.12.2010 US 969421
(71) Applicant: Marcus, Robert, Alameda, CA 94501 (US)
(72) Inventor: Marcus, Robert, Alameda, CA 94501 (US)
(74) Representative: Johnston, Magnus George

(57) **Abstract**

An unmanned aerial vehicle (UAV) may be used to deliver a descent system to an elevated location at which people await rescue, such as people trapped in an upper story of a burning building. The UAV may deliver the descent system, attach it to the building, and deploy the descent system. After deployment, the descent system may be tensioned to prevent sway and facilitate descent. Standoffs may be installed or integrated into the descent system to provide for adequate handholds for descending individuals. Various equipment and methods used in such systems are described herein.

## Description

### BACKGROUND

Modern multi-story structures such as multi-story buildings may rise to heights of many hundreds of feet and include dozens of floors. Due to their height, structural constraints, and floorplans, multi-story buildings typically have limited egress routes for people located on floors above ground level. During a fire or other life-threatening emergency in a building, there is a possibility that people located within the building will not be able to access the egress routes to self-rescue and will instead require rescue from a third party.

### SUMMARY

One embodiment of the invention provides for a method of delivering a deployable descent device to an elevated location using an unmanned aerial vehicle. The first end of the deployable descent device is anchored to the elevated location by the unmanned aerial vehicle; the deployable descent device is then deployed such that the second end of the deployable descent device is at a lower altitude than the first end of the deployable descent device. Further embodiments include delivering a second deployable descent device and connecting a first end of the second deployable descent device to the second end of the deployed deployable descent device; the second deployable descent device may then be deployed. The deployable descent device may also be later retrieved from the elevated location by the UAV.

Further embodiments of the method provide for anchoring the second end of the deployable descent device to a second location at a lower altitude than the elevated location; a tensile load may then be induced in the deployable descent device in addition to any tensile load attributable to the weight of the deployable descent device.

Other embodiments of the method also include providing two or more standoffs to offset the deployable descent device from a surface across a substantial portion of the first deployable descent device, wherein the surface is located between the elevated location and the second location.

Another embodiment of the invention provides a system including a deployable descent device with a first end and a second end, an unmanned aerial vehicle configured to provide for delivery of the deployable descent device to an elevated first location and to anchor the first end of the deployable descent device to the first elevated location. The unmanned aerial vehicle may be further configured to provide for anchoring of the second end of the deployable descent device to a second location at a lower altitude than the elevated first location. The unmanned aerial vehicle may also be configured to provide for inducement of a tensile load in the deployable descent device in addition to any tensile load attributable to the weight of the deployable descent device.

Embodiments of the system may include two or more standoffs configured to offset the deployable descent device from a surface across a substantial portion of the deployable descent device when the deployable descent device is anchored to the elevated first location and the second location and wherein the surface is located between the elevated first location and the second location.

Embodiments of the system may also include a second deployable descent device, the second deployable descent device having a first end and a second end, wherein the UAV is further configured to provide for delivery of the second deployable descent device to the second end of the deployable descent device after the deployable descent device has been anchored to the elevated first location and for attaching of the first end of the second deployable descent device to the second end of the deployable descent device.

Further embodiments of the system may include embodiments wherein the UAV is further configured to provide for deployment of the deployable descent device after the deployable descent device has been anchored to the elevated first location. In yet other embodiments, the system may include the UAV being configured to retrieve the deployable descent device after the deployable descent device has been anchored to the elevated first location.

Embodiments of a deployable descent device may include two or more risers; a plurality of rungs, each rung spanning between the two or more risers; a plurality of standoffs, each standoff connected with a rung or a riser; a first end; and a second end, wherein the first end is configured to be anchored to an elevated first location, and wherein the second end is configured to be anchored to a second location or connected to a chain of one or more other deployable descent devices sequentially connected with one another.

Further embodiments of the deployable descent device may include standoffs comprising radially-symmetric spacers mounted onto selected rungs in the plurality of rungs, wherein each radially-symmetric spacer is substantially radially centered on the rung onto which the radially-symmetric spacer is mounted. In some embodiments, the standoffs may include an interface material, the interface material selected from the group including rubbers, adhesives, and adhesive tapes, wherein the interface material forms contact patches between the standoffs and a surface when the deployable descent device is anchored to an elevated first location and a second location and wherein the surface is located between the elevated first location and the second location.

In another embodiment of the deployable descent device, each standoff is integrated into the rung with which it is connected, and wherein each rung in the plurality of rungs is configured to provide a substantially flat stepping surface substantially normal to the two or more risers when the deployable descent device is anchored to the elevated first location and the second location, and offset the two or more risers from a surface when the deployable descent device is anchored to the elevated first location and the second location, wherein the surface is located between the elevated first location and the second location.

Further embodiments of the deployable descent device may include one or more tensioning devices, the one or more tensioning devices configured to provide for the inducement of a tensile load in the one or more risers when the deployable descent device is anchored to the elevated first location and the second location, wherein the tensile load is in addition to any tensile load generated due to gravity.

Other embodiments of the deployable descent device may include unmanned aerial vehicle interface features, wherein the unmanned aerial vehicle interface features are configured to allow the deployable descent device to be removably mounted to a mating delivery interface on an unmanned aerial vehicle, and support the deployable descent device during delivery to the elevated first location by the UAV.

### BRIEF DESCRIPTION OF THE DRAWINGS

Fig. 1A illustrates a UAV-delivered deployable descent device being delivered by a UAV.

Fig. 1B illustrates a UAV-delivered deployable descent device after deployment.

Fig. 2A illustrates one configuration of a UAV and deployable descent device.

Fig. 2B illustrates a configuration of a UAV featuring a spool-wound deployable descent device.

Figs. 3A-3D illustrate various anchor technologies that may be used in some embodiments.

Figs. 4A-4C illustrate various tensioning systems that may be used in some embodiments.

Figs. 5A-5E illustrate various standoff technologies that may be used in some embodiments.

Fig. 6 provides a flowchart for one embodiment.

Fig. 7 provides a flowchart for an embodiment featuring a sectioned deployable descent device.

### DETAILED DESCRIPTION OF EXAMPLE EMBODIMENTS

In the following description, numerous specific details are set forth in order to provide a thorough understanding of the present invention. The present invention may be practiced without some or all of these specific details. In other instances, well known process operations have not been described in detail to not unnecessarily obscure the present invention. While the invention will be described in conjunction with the specific embodiments, it will be understood that it is not intended to limit the invention to the embodiments.

For example, the techniques and mechanisms of the present invention will be described in the context of particular multi-story buildings. However, it should be noted that the techniques and mechanisms of the present invention apply to a variety of different structures. In the following description, numerous specific details are set forth in order to provide a thorough understanding of the present invention. Particular example embodiments of the present invention may be implemented without some or all of these specific details. In other instances, well known process operations have not been described in detail in order not to unnecessarily obscure the present invention.

Various techniques and mechanisms of the present invention will sometimes be described in singular form for clarity. However, it should be noted that some embodiments include multiple iterations of a technique or multiple instantiations of a mechanism unless noted otherwise. For example, a system uses an aerial vehicle in a variety of contexts. However, it will be appreciated that a system can use multiple aerial vehicles while remaining within the scope of the present invention unless otherwise noted. Furthermore, the techniques and mechanisms of the present invention will sometimes describe a connection between two entities. It should be noted that a connection between two entities does not necessarily mean a direct, unimpeded connection, as a variety of other entities may reside between the two entities.

Modern structures such as buildings may consist of multiple stories and may be occupied by many hundreds or, in some cases, thousands of people. Multi-story buildings may be used for commercial or office space, for residential use, or for mixed-use purposes. The typical floor height for such buildings ranges between 3 and 4 meters, and the number of stories in a multi-story building may reach more than 150 floors.

While modem buildings may contain fire suppression systems and may be constructed of fire-resistant structural materials, fire still represents a significant threat to the safety of building occupants. Fires may exceed the fire safety system capacity of a building, may block the egress routes, or may compromise the operation of the fire safety system.

Other types of disasters may necessitate the rescue of the occupants of a multi-story building as well, such as hazardous chemical spills, hostage situations, bombings, collapse of an intermediate floor without total building collapse, etc.

Embodiments of the present invention may be used in situations where the occupants of a building, structure, or elevated location can not or will not use the built-in egress routes from a building.

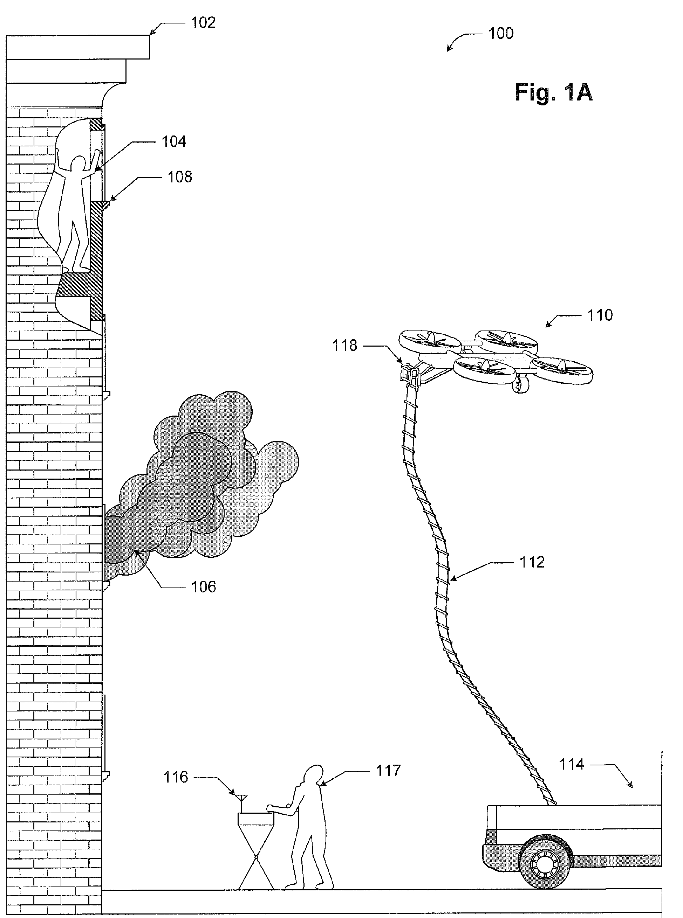

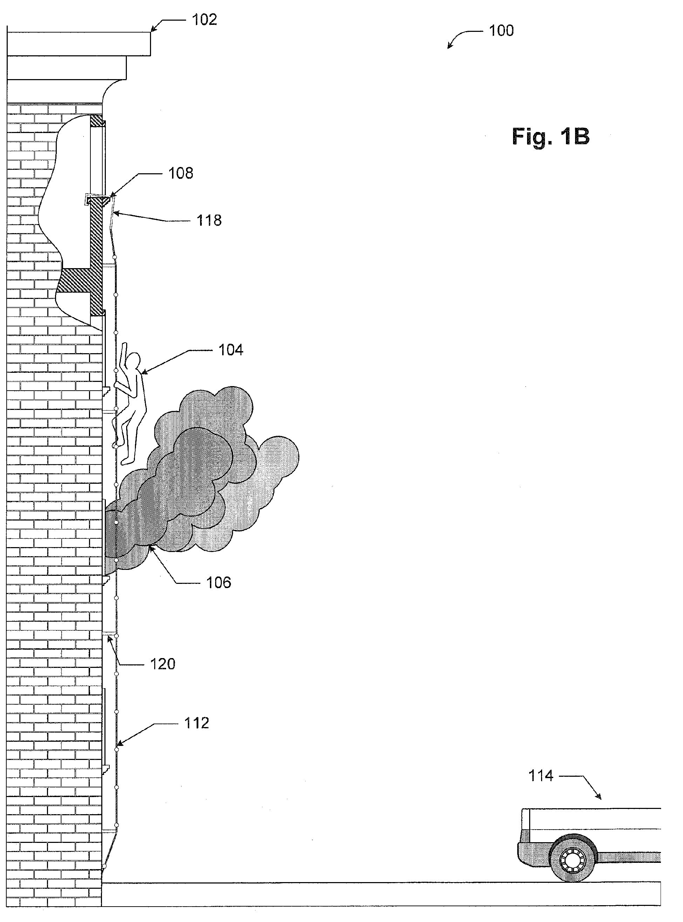

Fig. 1A illustrates one example of a deployable descent device. Rescue site 100 features building 102, which is on fire. Rescuee 104 is trapped in building 102 by fire and smoke 106. Rescue personnel 117 may initiate rescue of rescuee 104 by delivering deployable descent device (hereinafter "D3") 112 to elevated location 108 on building 102 by unmanned aerial vehicle (hereinafter "UAV") 110 controlled by UAV controller 116. According to various embodiments, UAV 110 anchors D3 112 to elevated location 108 using anchor device 118 and then deploys D3 112. Fig. 1B depicts rescue site 100 after D3 112 has been anchored and deployed. After anchoring and deployment, D3 112 may be used by rescuee 104 to descend from building 102. UAV 110, D3 112, UAV controller 116, and rescue personnel 117 are not shown in Fig. A2, although they may still be present. UAV 110, D3 112, UAV controller 116, and rescue personnel 117 may all travel to and from rescue site 100 using transport vehicle 114.

*UAV*/*Rotorcraft*

Various embodiments use a UAV to deliver a deployable descent device (D3), described further in a later section, to an elevated location on a building.

Particular embodiments use a UAV which may be a rotorcraft or other aerial vehicle capable of three-dimensional station-keeping. A rotorcraft (or rotary-wing aircraft) is a heavier-than-air aerial vehicle that derives lift through the rotation of rotor blades. The mast may alternatively be referred to as a shaft. A rotor includes a mast and multiple rotor blades (typically between two and six blades) mounted to the mast. A rotorcraft can use one or more rotors to provide vertical lift and/or horizontal thrust. Rotors on vertical masts and other vertical force generating devices are referred to herein as lifters.

Rotorcraft may use a rotor capable of both vertical lift and horizontal thrust. For example, a modem helicopter is capable of altering the pitch of each rotor blade individually throughout a rotor rotation. In this way, the rotor may be controlled to differing amounts of lift in different areas of the rotor sweep. For example, a helicopter rotor may develop more lift on the right side of the helicopter than on the left side, causing the helicopter to drift and pitch to the left. The mechanism and controls for implementing a variable-pitch rotor such as those used in helicopters are quite complex.

Various rotorcraft embodiments may also include a plurality of rotors with rotor blades of fixed pitch. Such rotorcraft may vary the speed and, consequently, the lift of each rotor to cause such rotorcraft to tilt, yaw, pitch, and drift.

Further embodiments of rotorcraft may include rotors on horizontal masts and other horizontal force generating devices, which are referred to herein as thrusters. Lifters and/or thrusters may include rotors, turbines, rockets, and/or static lifting surfaces. The use of thrusters may allow such rotorcraft to translate and rotate in a horizontal plane without altering the lift supplied by the lifters.

Use of the terms "vertical" and "horizontal" in this context refers to the direction of the generated forces just prior to rotorcraft takeoff. The directions of such thrust with respect to the ground may change over time if the rotorcraft pitches, yaws, or rolls, but for convenience, "vertical" and "horizontal" are used in this document regardless of the orientation of the rotorcraft relative to the ground.

Other embodiments may utilize a UAV which derives lift and control from various other mechanisms. For example, the UAV may rely on a compressed air source to provide lift and/or thrust for the UAV. The compressed air source may be located onboard the UAV, such as an onboard compressed air tank or a solid or liquid propellant which is reacted to produce a pressurized gas, similar to a rocket engine. The compressed air source may also be ground-based and supplied to the UAV via a pressurized gas supply line trailing from the UAV. The compressed air may then be channeled through exhaust ports designed to produce lift and/or thrust. Other materials may be used in place of air as well-for example, denser gases or even liquids may provide greater reaction mass and enhanced performance.

Other UAV embodiments may utilize a balloon or other lighter-than-air technology to provide lift. Such embodiments may require much smaller lifters, or no lifters at all. A balloon UAV embodiment may be modified to lift greater loads through adding additional balloons-this may allow a balloon embodiment of a UAV to be rapidly configured in the field to lift D3's of various sizes and weights. A balloon UAV embodiment may still feature lifters and thrusters to provide fine positional control.

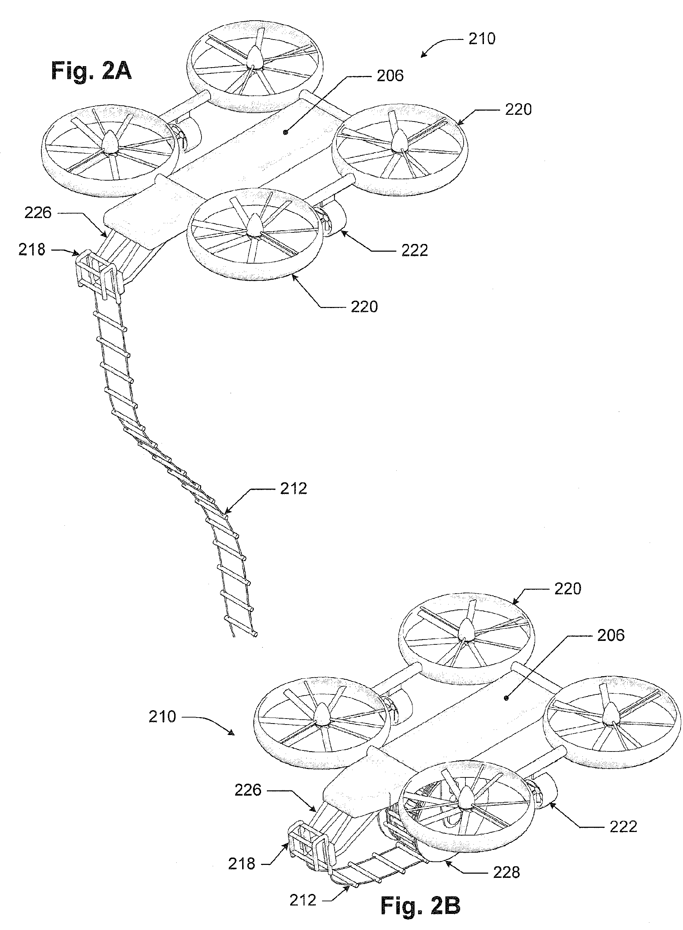

Fig. 2A and Fig. 2B depict an example of a UAV. UAV 210 depicted in Figs. 2A and 2B is a quad-lifter UAV with two thrusters. Four lifters 220 provide lift, pitch, and roll capabilities to UAV 210; two thrusters 222 provide yaw and horizontal translation capabilities to UAV 210. Such a configuration allows UAV 210 to be precisely controlled and maneuvered, considerably simplifying the deployment of D3 212. In this embodiment, UAV 210 features shrouded rotors for additional safety and robustness. UAV flight control and power system 206 may house electronics and power supplies for UAV 210.

Fig. 2A depicts UAV 210 with D3 212 suspended from mechanical interface 226. D3 212 includes anchor device 218, which may mate to mechanical interface 226. Anchor device 218 or, in some embodiments, D3 212, may include interface features designed to mate to mechanical interface 226. Such interface features may be positively engaged by mechanical interface 226 to prevent unintentional release of D3 212. Mechanical interface 226 may release D3 212 when D3 212 has been delivered to the target site. Other anchor devices may be used in addition or alternatively to anchor device 218. D3 212, which is depicted as a rope ladder in Fig. 2A, trails below UAV 210 as UAV 210 ascends to an elevated anchor location. Such a configuration is straightforward and requires minimal integration with UAV 210. However, trailing D3 212 may snag on obstructions, snarl itself, or act as a drogue device which interferes with control of UAV 210.

Fig. 2B depicts UAV 210 with D3 212 wound around deployment spool 228. Such a configuration may be used to alleviate some of the issues noted above with respect to free-hanging D3 212 as shown in Fig. 2A. D3 212 may be wound around deployment spool 228 for storage. Deployment spool 228 may be provided as a "cartridge" which is installed into UAV 210 for delivery to the elevated anchor point. A cartridge-based D3 212 allows for rescue personnel to rapidly equip UAV 210 for a rescue attempt compared to a free-hanging D3 212, which may require rescue personnel to monitor D3 212 for tangles or other issues affecting deployment. After anchoring D3 212, UAV 210 may fly away from the anchor point, spooling out D3 212 from deployment spool 228 along the way. Alternatively, UAV 210 may be configured to release deployment spool 228 after anchor device 218 has been attached to the anchor point. Deployment spool 228 may then self-unwind under its own weight.

According to various embodiments, a UAV is equipped to deliver the D3 to an elevated location, such as a window or other access point, on a building. To facilitate delivery of the D3, the UAV may include a mechanical interface, such as mechanical interface 226 in Figs. 2A and 2B, which allows the UAV to carry the D3. The mechanical interface may be configured to release the D3 after the D3 has been anchored to the elevated anchor point. The UAV may automatically release the D3 when the D3 is anchored, or the D3 may be released in response to a remote command from a human controller. However, release of the D3 is not required-the UAV may also remain connected with the D3 after anchoring if desired.

According to various embodiments, the UAV may be equipped with a releasable anchor device which allows the UAV to then perform other tasks after anchoring is complete. A releasable anchor device is also less likely to obstruct rescuees from using the D3. For example, a UAV may be equipped with a separate anchor-delivery device which may be used to install an anchor device prior to delivery and installation of the D3. One UAV may be equipped with the anchor-delivery device, and another UAV may be equipped with a mechanical interface configured to deliver the D3. Alternatively, a single UAV may be equipped to perform both tasks, or reconfigured with the mechanical interface for D3 delivery after delivering the anchor device(s) with an anchor-delivery device.

The UAV may also feature additional equipment to facilitate rescue operations. For example, a UAV may have conventional tools, such as drills, saws, spring-loaded punches, and explosive powder-actuated fastener systems. Further embodiments may feature UAVs equipped with more specialized equipment, such as shaped charges, piton guns, and mechanical graspers. UAVs may also be equipped with ancillary equipment such as local-area fire suppression devices, public-address or readerboard devices for communicating to rescuees, two-way communications systems, and other equipment which may facilitate communication with or protection of rescuees in elevated locations. Such tools may be located on one UAV, distributed across several UAVs, or be configured to be interchanged on a UAV. For example, particular embodiments may include using two UAVs, one of which is equipped to deliver, anchor, and deploy the D3, and the other which is equipped with a spring-loaded punch which may be used to break a tempered glass window at the elevated location and a public address system or readerboard for indicating to rescuees when it is safe for them to descend using the D3.

The use of a UAV and deployable descent device provides a number a benefits. For example, hook-and-ladder trucks are used by fire departments to access multi-story buildings, but are limited in terms of the height to which they may extend their ladders. Hook-and-ladder trucks must also be maneuvered close enough to the building to bring the ladder within reach of the building walls. This is not always feasible. For example, the building in question may not be accessible to road vehicles. This may occur due to rubble or other obstructions, which may often be present if the emergency involves a natural disaster or other cause of wide-spread destruction. Buildings may also be inaccessible to road vehicles due to their construction; for example, a 10-story building may include a lobby level with a significantly large footprint than the remaining stories. The lobby may prevent a road vehicle from approaching close enough to the remaining stories to rescue people trapped in those stories. In many cases, rescuees may simply be located on a side of the building not adj acent to a road.

By contrast, UAVs are capable of flying to significant heights and are more than capable of exceeding the height limitations of a hook-and-ladder truck. UAVs are also capable of flying over obstacles that would block a road vehicle.

While aircraft have been used in various rescue roles in the past, such aircraft have typically been manned aircraft. For example, helicopters have been used to evacuate stranded homeowners. Another example might be the use of airplanes to allow rescuers to search a wide area quickly for rescuees; the rescue personnel in the airplanes can quickly direct ground-based rescuers to the site of the rescuees once they have been located.

UAVs have typically been used for military reconnaissance and precision weapon delivery. Most military UAVs are fixed-wing craft and are incapable of three-dimensional station-keeping due to an inherent inability to hover. Newer military UAVs feature the ability to hover to enable them to be operated in terrain which might not be conducive to fixed-wing UAV use, such as canyons and dense urban areas.

The use of a UAV with three-dimensional station-keeping capability in various embodiments allows rescuers better access to structures in which rescuees might be present. According to various embodiments, UAVs have features that allow operation in close proximity to buildings. Features may include stability control, enclosed rotor blades, small size, etc. UAVs may approach close enough to a building to interact with the building, anchor a D3, and perform other rescue tasks. In some embodiments, the UAV may be small enough to enter a building.

For example, a conventional, manned helicopter such as a Sikorsky UH-60L has a fuselage width of 7 ft 9 in and a rotor sweep of 53 ft 8 in. Because of the fact that the rotors of a UH-60L extend beyond the fuselage by approximately 23 feet, the UH-60L is prevented from getting closer than 23 feet to the side of a building-without factoring in any margin for safety. Additionally, the use of a manned rescue helicopter in such close proximity to a building and the often-capricious wind patterns of urban canyons places the helicopter, its crew, the building, and any rescuees in the vicinity at tremendous risk. Finally, helicopters and helicopter crews are tremendously expensive to own and operate-the UH-60L, for example, has an acquisition cost of about $6 million dollars.

Using a UAV avoids many of the shortcomings of manned aerial vehicles. For example, UAVs are, by definition, unmanned. A UAV may operate completely autonomously or in conjunction with a remote human pilot. In either case, there is an extremely low chance that people will be injured in the event of a UAV crash because the UAV does not carry any passengers; the only UAV failure mode which is likely to result in injury to a human would be if the UAV fell on or collided with a human.

UAVs may also be significantly smaller and lighter than manned aerial vehicles; this is due to the simple fact that UAVs do not need to transport human beings and are not required to include the same safety margins as human-piloted aerial vehicles. For example, an aerial vehicle with a human on board typically requires increased power for emergency situations, increased fuel reserves, restraints and seats for the human occupants, environmental controls, enhanced safety systems, etc. All of these requirements add to the size and weight of the aerial vehicle, reduce maneuverability, and add to cost. UAVs, by contrast, do not require nearly as much hardware. UAVs may therefore be constructed to a much less exacting design standard and may be significantly smaller than manned aerial vehicles.

*Base Station*

Due to the small size of UAVs, a transport vehicle, or base station, may transport the UAV to the general vicinity of the rescue site. The transport vehicle may be a truck or trailer, although other vehicles might be used as well depending on the size of the UAV, the nature of the anticipated terrain, and vehicle availability. The transport vehicle may also transport the D3 and other associated hardware, such as spare fuel or batteries, charging stations, controllers, anchors, standoffs, tensioning devices, spare parts, and/or spare UAVs. The transport vehicle may also include medical equipment for providing first aid to rescuees. Some embodiments may feature a purpose-built vehicle which incorporates transport, control, storage, and fueling capabilities for the UAV and D3.

In some embodiments, the UAV may actually be transported by a human operator in a backpack. For example, while the present invention has been discussed in the context of rescuing people from distressed buildings, there may be situations in which embodiments of the present invention may be used to rescue, for example, stranded rock climbers. In such scenarios, the rescuees may be located a considerable distance from any location accessible to a road vehicle and the UAV may need to be transported from the nearest road-accessible location to the rescue site by a human porter. Such embodiments may utilize a smaller UAV than would be used in urban rescue situations and a lighter-duty D3 to reduce backpack weight.

D3

Various embodiments may utilize any of several varieties of D3. While D3 is used to refer to a "deployable descent device" in this paper, it should be understood that this name refers to the primary purpose of such devices-to allow rescuees to descend from an elevated location. However, it may also be possible for personnel to ascend a deployed D3 to reach stranded rescuees. This may be necessary, for example, when a rescuee is injured and unable to self-rescue using the D3. In some embodiments, the system may be used even when there are no rescuees. For example, disaster response personnel may simply use a deployed D3 to access otherwise-inaccessible locations in order to perform duties other than rescue, such as firefighting. The use of "deployable descent device" in this application should not be read as limiting the invention to only cover devices which provide descent-only capabilities, but should be read as including devices which allow for both ascent and descent.

One variety of D3 suitable for use in particular embodiments is a cable ladder. Ladders feature a series of horizontal steps, called rungs, which are supported by one or more vertical supports, called risers. A cable, or rope, ladder typically features flexible risers made of cable, rope, or webbing which support rungs made of a rigid or flexible material.

A cable ladder D3 may utilize a non-metallic woven material for the risers. Modern woven materials can exhibit tremendous strength in combination with extremely light weight. For example, polyester ropes with maximum tensile breaking strengths of over 9000 lbs are commonly available and weigh less than 8 lbs per 100 ft.

A cable ladder D3 may alternatively utilize metallic woven material for the risers, such as stainless steel cable. 304 stainless steel cable, for example, is available in a 5/32" diameter with a minimum tensile breaking strength of 2400 lbs and a weight of 4.5 lbs per 100 ft. While steel cable, in general, weighs more per foot than many synthetic ropes of equivalent strength, steel has the added advantage of being more tolerant of abuse, including exposure to flames or high heat and abrasive or sharp edges. Lightweight cable ladders utilizing steel cable risers may weigh as little as 3.25 lbs for a 32 ft long ladder and feature cables with tensile breaking strengths in excess of 1300 lbs.

The rungs for a D3 cable ladder may be made from rigid or non-rigid materials. For example, the rungs may be made from aluminum, carbon-fiber, or other lightweight, rigid materials. The rungs may be solid, although rungs with hollow cross sections can be used in order to reduce weight of the D3. The rungs may also be hollow but filled with a secondary material, such as a rigid, lightweight foam, to provide additional strength and rigidity. The rungs for a D3 cable ladder may also be made of a flexible material. Because flexible material rungs are non-rigid, they may collapse under gravitational loading and be difficult for unskilled users, i.e., rescuees, to use. Methods and equipment for preventing flexible rung collapse are detailed later in this paper.

Another variety of D3 suitable for use with particular embodiments is a rigid ladder. A rigid ladder may be less daunting to rescuees due to the average person's familiarity with rigid ladders, such as household stepladders and extension ladders, and rescuees may be less hesitant to use them. Rigid ladders are also less likely to shift and sway than cable ladders. Rigid ladder D3 s may be manufactured from lightweight, rigid materials, such as thin-wall steel, aluminum, or carbon fiber tube sections.

The rigid ladder may be provided as a plurality of modular sections, each section configured to connect to adj acent sections to form a continuous chain of ladder sections. The connections between the ladder sections may be rigid or may permit the ladders to move relative to each other, similar to links in a chain. The connection mechanism may be toolless and configured to allow the UAV to connect a ladder section to a ladder section which is already suspended from the anchor location. The sectional ladder approach may also be used to extend cable ladders. For example, two cable ladders may be connected together through the use of carabineers or other connection means.

Other descent technologies may be utilized aside from ladders. For example, D3 may consist of a zipline or other cable-pulley arrangement. A zipline may be delivered to the anchor point and anchored by the UAV. The UAV may then be used to deliver zipline trolleys to rescuees, who may then use the trolleys to descend from the elevated location.

*Anchoring devices*

The D3 may be anchored, in some manner, to, or near to, an elevated location from which rescuees are to be rescued. To facilitate anchoring, the D3 may be associated with any of a variety of anchoring devices. For example, the D3 may be configured to connect to a J-style hook, such as that represented by anchor 218 in Figs. 2A and 2B. Such an anchor may include features designed to connect to a mechanical interface, such as mechanical interface 226, on the UAV as well.

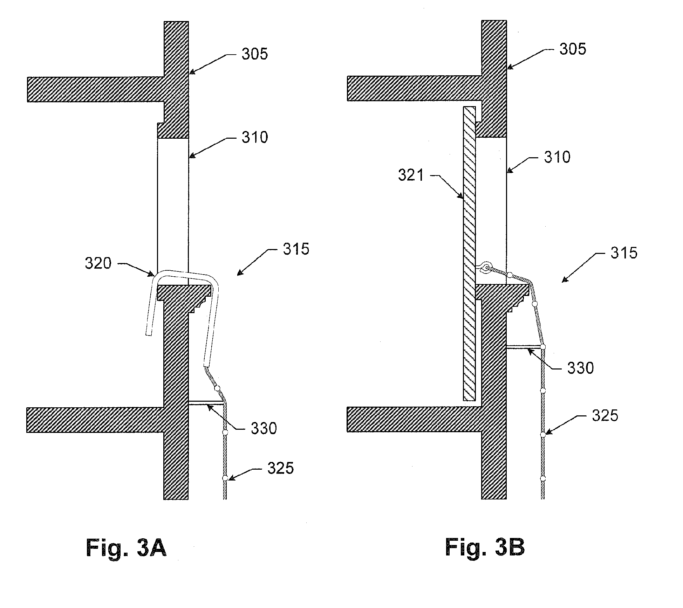

J-hook 320 may be delivered by the UAV to elevated location 315 on building 305 and placed over a window 310 sill, parapet, railing, or other such feature, as shown in Fig. 3A. Like-numbered items in Figs. 3A-3D refer to like structures. Once released, J-hook 320 grapples anchor location 315 and may support attached D3 325. Standoff 330 may be used to prevent D3 325 from contacting the side of building 305, as detailed later in this paper. The placement of the J- hook may be performed by the UAV, either under manual control or under local autonomous control. A quadlifter UAV, as discussed earlier, may be particularly well-suited to such placement maneuvers due to the degree of control it affords the operator. Alternatively, the UAV may deliver the D3 to a human, such as a rescuee, near the anchor point and rely on the human to anchor the D3 to a suitable feature with the anchor device. The human may be instructed on the proper method for installing the anchor via any number of means, including written instructions, audio instructions via cell phone or UAV public address system, or video instructions displayed on a display carried by the UAV. Live feedback may be provided to a human anchor installer by the UAV controller, who may observe the progress of the human anchor installer using cameras mounted on the UAV.

Fig. 3B illustrates a deployable crossbar anchor device 321. A UAV equipped with a crossbar anchor device 321 would deliver the crossbar anchor device 321 to a suitable anchor point, such as a window 310 or door opening. Crossbar anchor device 321 may feature a major dimension larger than the width and/or height of the anchor point opening, but would feature minor dimensions considerably smaller than the opening dimensions. During crossbar anchor device 321 delivery, the UAV may rotate and translate crossbar anchor device 321 such that crossbar anchor device 321 passes through the opening, i.e., such that the major axis of the crossbar anchor device 321 is approximately parallel to the direction of translation through the opening. After crossbar anchor device 321 has passed through the opening, the UAV may rotate crossbar anchor device 321 such that the major axis spans the opening. D3 325 attached to a crossbar anchor device 321 installed in this manner will pull crossbar anchor device 321 against the edges of the opening when tensioned. Crossbar anchor device 321 may be useful when there is no lip or wall from which a J-hook may be hung or where the structural integrity of such a lip or wall is suspect.

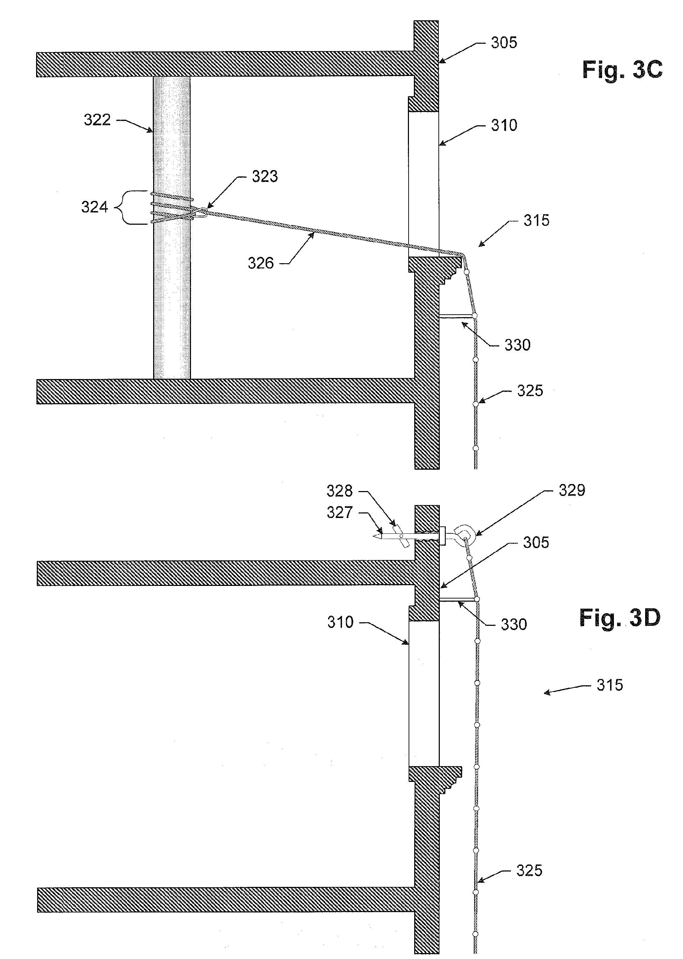

Particular embodiments may rely on an internal building structure, such as a support column, to provide an anchor point, such as shown in Fig. 3C. In such embodiments, the UAV is designed with a form factor conducive to navigating the internal structure of building 305 and may include features to prevent collisions with internal structures, such as shrouded rotors, and be equipped to break windows or other frangible obstacles within a building. The UAV may navigate to an elevated access point in the building, fly into the building through window 310, and locate an appropriate support structure 322, such as a building column or an elevator shaft. The UAV may then circle support structure 322 while paying out tether 326; after making one or more circuits around the support structure, the UAV may then attach the end of the tether to another location on the tether with, for example, carabineer 323, forming loop or noose 324 about the support structure. Alternatively, the UAV may attach the end of tether 326 to a point in the interior of building 305 and then fly around support structure 322, effectively wrapping tether 326 about support structure 322 one or more times. Such a configuration benefits from the friction between wrapped tether 326 and support structure 322, which can be used to support suspended D3 325 after D3 325 deployment.

The anchor device may also incorporate more permanent anchoring technologies other than those discussed above. For example, as shown in Fig. 3D, anchoring device 329 may rely on concrete bolts 327 placed in the side of building 305 at the anchor point. Such concrete bolts 327 may require the UAV to first drill a hole to receive the concrete bolts 327. Alternatively, the UAV may utilize a powder-actuated fastener system to explosively drive concrete bolts 327 into the side of the building. A powder actuated fastener system may also be used with some metal-sided buildings. The concrete bolts may include expansion features 328 to prevent slippage after setting.

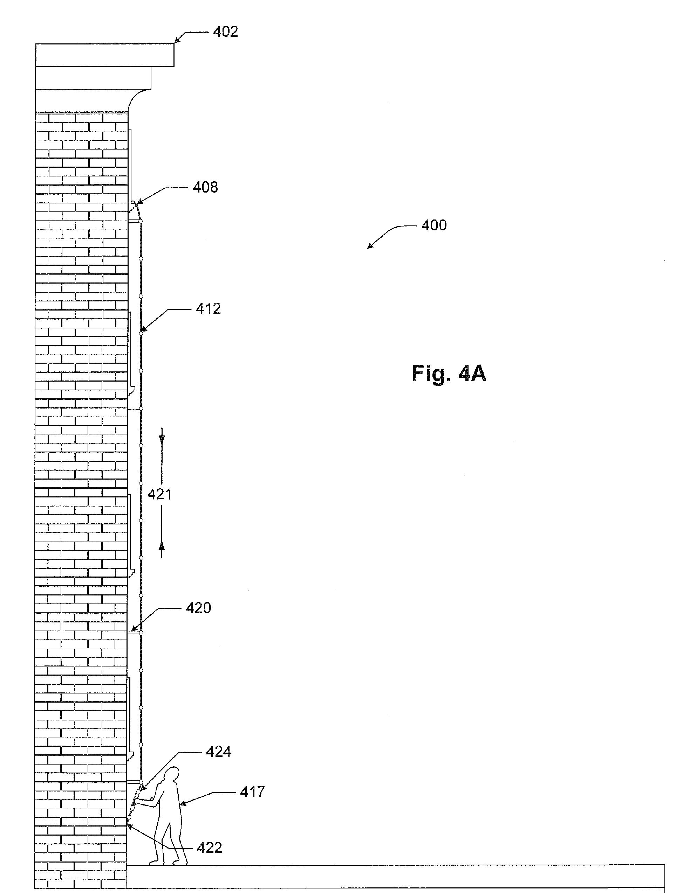

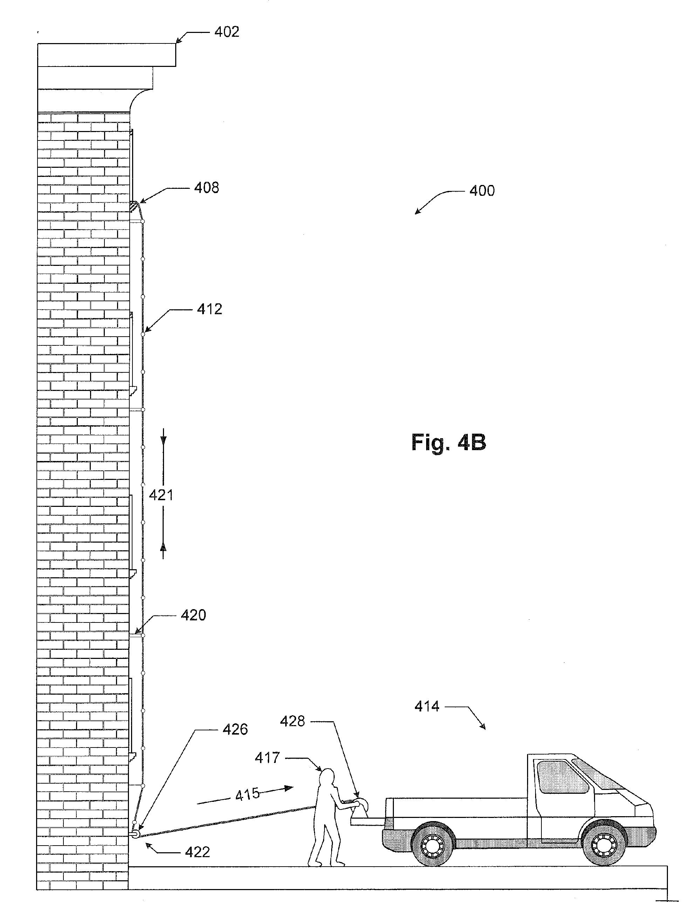

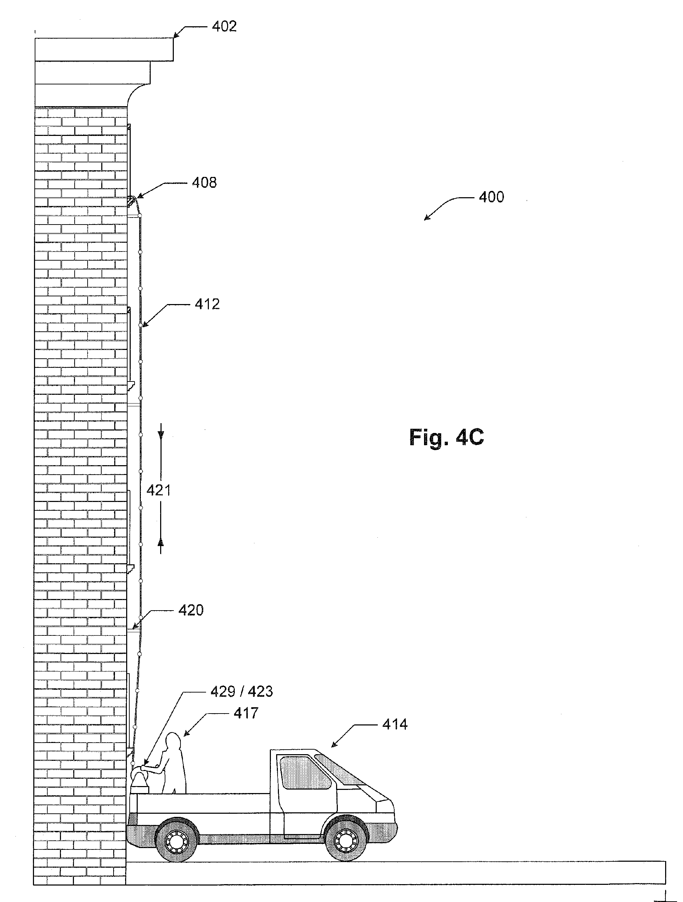

Figs. 4A, 4B, and 4C depict building rescue site 400, which includes building 402. D3 412 has been anchored to building 402 at elevated anchor point 408. After anchoring D3 412 to elevated anchor point 408, the lower end of D3 412 may be anchored to lower anchor point 422, as shown in Figs. 4A and 4B. Fig. 4C illustrates an embodiment in which ground transport vehicle 414 is maneuvered into close proximity to building 402 and winch 429 serves as lower anchor point 423.

If D3 412 is sufficiently long, ground personnel 417 may perform the anchoring at lower anchor point 422 using any suitable technology. If the lower end of D3 412 is not accessible to ground personnel 417, methods and technologies such as those used for establishing elevated anchor point 408 may be used. This may be the case in situations where it may not be practical or safe to require rescuees to descend all the way to ground level via D3 412. For example, if the rescuees are located on the 100^{th} floor of a building with a fire on the 99^{th} floor, it would be preferable to use the UAV to deliver a D3 capable of spanning between the 100^{th} floor and the 98^{th} floor; the rescuees would then only have to descend 2 floors using the D3 instead of 100 floors. Rescue personnel may also ascend to the 98^{th} floor and assist rescuees in re-entering the building after using the D3.

In particular embodiments, if the D3 is a ladder-type device, the end of the D3 will be anchored such that the ladder remains in close proximity to the side of the building across the D3's span. If the D3 is a zip-line type device, then the end of the D3 will likely need to be anchored a considerable distance from the building to reduce the slope angle of the zipline and manage zipline speed.

While cable ladders may look relatively easy to climb, they present significant challenges to individuals who have never climbed them before. These challenges may be significantly compounded for rescuees awaiting evacuation from a burning building and who are already panicked and distressed. Cable ladders also have a predilection for swaying, twisting, and buffeting due to wind and user loading. Such behaviors may further intensify rescuees' distress. A panicked rescuee may endanger themselves, other rescuees on the D3, and the D3 itself in some situations.

Various embodiments address this issue by providing equipment for inducing further tensile loads in an anchored D3 other than gravitational loading, i.e., self-loading; two examples of such equipment are depicted in Figs. 4A and 4B. Tensioning an anchored D3 causes the D3 to experience significantly less twisting, swaying, or buffeting due to wind loading or user movements. This is because these behaviors require that the risers be capable of movement; tensioning the D3 introduces tension into the risers, which restricts the range of movement the risers will support. By introducing a tensile load into the D3, the D3 will behave much more like a rigid ladder, which will reassure rescuees using the ladder.

Tensioning may also be used to prevent flexible material rung collapse, described previously, from occurring. The tensioning equipment may be configured to induce tension not only in the risers, but in the rungs as well. This may be achieved by spacing the anchor points for each end of a D3 slightly further apart than the width of the D3 when the rungs are at full extension. By applying tension in the rungs, rungs made of flexible material may be prevented from collapsing, making it easier for rescuees to use the D3.

Tension may be introduced through any of a number of devices. For example, as shown in Fig. 4A, D3 412 may include turnbuckle or ratcheting pawl devices 424 which may be adjustable by ground personnel 417 to introduce tension 421 into D3 412. In Fig. 4B, lower anchor point 422 includes pulley 426. Ground personnel 417 may route a cable connected to the lower end of D3 412 through pulley 426 and into winch 428, which may be mounted on a fixed location, such as ground transport vehicle 414. The cable may be drawn into 415 winch 428, thereby inducing tensile load 421 in D3 412. In Fig. 4C, ground transport vehicle 414 is maneuvered to the base of building 402 and D3 412 is connected with winch 429, which also serves as lower anchor point 423. Winch 429 may then be tensioned to induce tensile load 412 in D3 412.

A tensioned D3 ladder-type device may also, however, be difficult for a rescuee to use if the risers are forced flush against the side of the building by the induced tension, preventing rescuees from grasping the riser with their hands. Various embodiments may include standoff devices 420 which are configured to maintain separation between the risers and the building. Standoff devices may be integrated into the design of a particular D3, or may be separate components installed by the UAV.

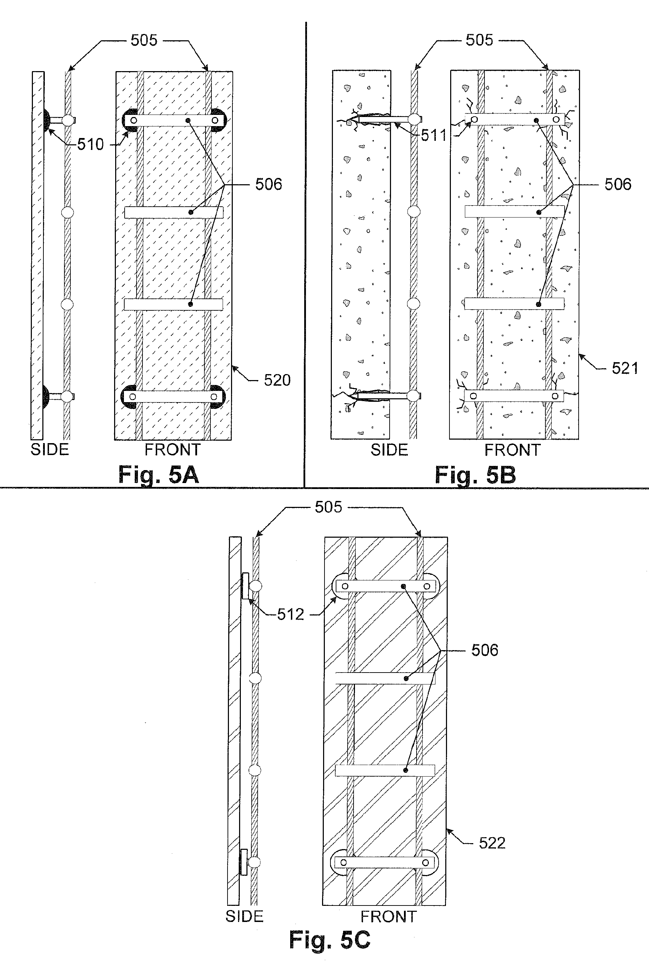

Standoff devices may be integrated with a particular D3. Standoff devices may also be separately attached to a building and then attached to a D3. The standoff devices used may be designed to interface with specific building materials, or may be designed for universal use. Standoff devices may include materials such as rubber, adhesives, or adhesive tape in areas which are designed to contact the building; the use of such materials in the standoff devices may allow the standoffs to provide lateral support to the D3 in addition to maintaining the gap between the D3 and the building. Figs. 5A- 5E depict a number of different types of D3 standoffs.

Fig. 5A depicts an embodiment in which ladder-type D3 505 includes standoffs which are integrated with ladder rungs 506 and which feature suction cups 510 for interfacing to glass-sided building 520. Suction cups 510 are separated from D3 505 with a spacer. In alternative embodiments, suction cups 510 are not separated from D3 505 with a spacer, but are directly mounted to rungs 506. In such cases, suction cups 510 may provide sufficient offset from building 520 to allow for easy gripping of the ladder risers by users. Fig. 5B depicts an embodiment in which ladder-type D3 505 includes standoffs which are integrated with ladder rungs 506 and which feature concrete nails 511 or screws for interfacing to concrete or stone building face 521. Concrete nails 511 may be installed using powder-actuated tooling. Fig. 5C depicts an embodiment in which ladder-type D3 505 includes standoffs which are integrated with ladder rungs 506 and which feature magnetic pads 512 for interfacing to metal-skinned building 522. As with the suction cup standoffs pictured in Fig. 5A, magnetic pads may or may not feature spacers to space them apart from rungs 506. Standoffs which positively engage the building face may also provide additional support for loads placed on the D3, which may relieve some of the stress on the upper anchor point.

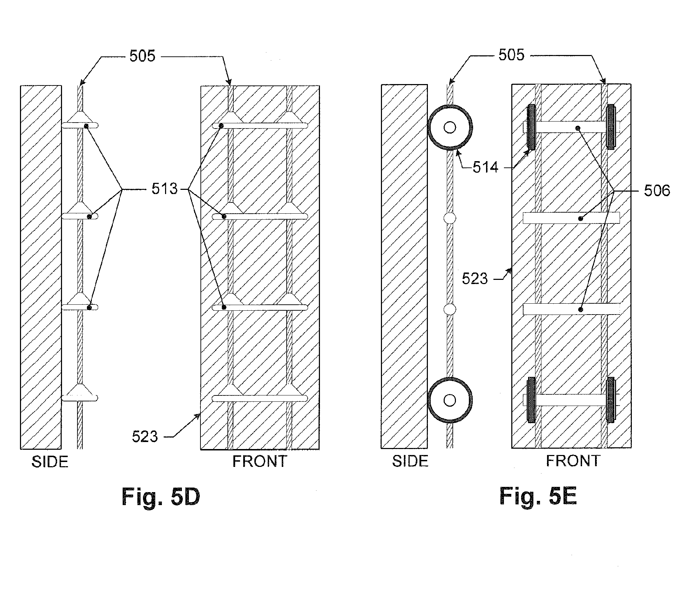

Figs. 5D and 5E depict embodiments in which the standoffs may be used with a variety of building material types. Fig. 5D depicts an embodiment in which ladder-type D3 505 includes ladder steps 513 which are designed to contact the side of building 523. Ladder steps 513 may feature a rubber edge material to provide friction against building 523. Fig. 5E depicts an embodiment in which ladder-type D3 505 includes rollers 514 on some of rungs 506. Rollers 514 may be free to rotate, although a rubber tread on rollers 514 may be used to prevent lateral displacement of D3 505. Rollers 514 may allow D3 505 to be tensioned without encountering resistance which fixed standoffs might produce. Rollers 514 are also self-aligning and would require little or no adjustment by a UAV.

*Example Embodiments*

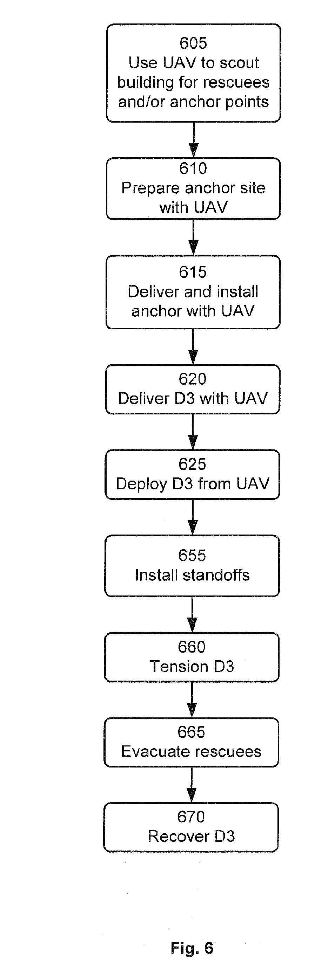

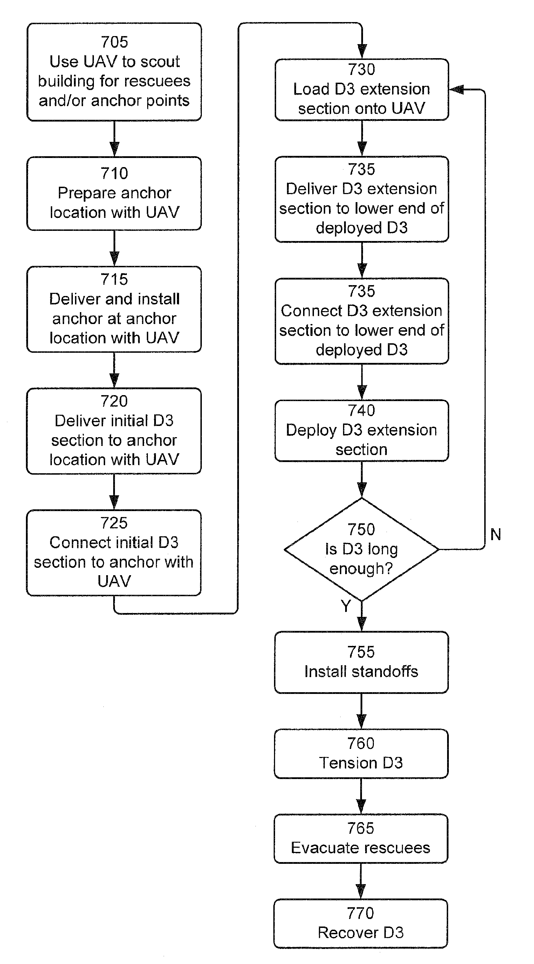

Two techniques utilizing a UAV-delivered D3 are detailed in Figs. 6 and 7, which are detailed below. It should be noted that not all of the operations depicted and described are necessarily required in accordance with the present invention; all or just some of the operations described may be performed, as well as further operations. A number of the operations are provided for context to facilitate description and understanding of the invention, but are optional in some embodiments.

Fig. 6 illustrates operations in a technique for rescuing trapped rescuees from a building. In 605, the UAV, which has been transported to the general vicinity of the building, is flown around the building to scout for potential rescuees and anchor points. The UAV may utilize video or still cameras to do this, or may use other, more sophisticated equipment, such as radar, thermal imaging, or other advanced detection equipment. The UAV may, itself, have the capability to recognize such entities using machine vision, although a human operator will likely monitor the UAV's sensor feeds to ensure that the UAV does not pass a potential target by. 605 is optional; it may be that rescuees and anchor points are already known to rescuers without the need for UAV scouting.

In 610, the UAV may prepare the anchor site to receive the anchor. This may involve, for example, the UAV breaking a window so that an interior building column may be used as an anchor point. It may involve drilling or blasting holes for concrete anchors. It may involve clearing away debris or rubble which would interfere with placement of a J-hook. 610 may be optional; it may be that a suitable anchor site exists and requires no preparation.

In 615, the UAV may deliver an anchor device to the anchor location. In some embodiments, 615 and 610 may be performed at the same time. For example, a concrete anchor may be placed using a powder-actuated tool. In such a scenario, the anchor self-drills the hole which receives it. The UAV may be maneuvered to place the anchor device in the proper location. The UAV may include tools or manipulators which may be used to connect the anchor to the anchor location.

In 620, the UAV may deliver the D3 to the anchor site. Again, in some embodiments, 620 may be performed in conjunction with 615 and/or 610. The UAV may attach the D3 to the anchor device in 620 if the D3 is not already attached to the anchor device.

In 625, the D3 is deployed from the UAV. For example, the D3 may be unwound from a carrier spool or may simply be dropped and allowed to self-unwind. After or during deployment, the UAV may release the D3.

In 655, standoffs may be installed between the D3 and the building side. Applicant acknowledges the numbering used in Fig. 6 does feature a sudden jump in numbering; this was done to allow operations depicted in Fig. 6 to be similarly numbered with respect to similar operations in Fig. 7. The reader should not construe this jump to mean that Fig. 6 is "missing" operations 630, 635, ..., 650. The UAV may be used to install standoffs to the building side and then connect the standoffs to the D3. Alternatively, the UAV may be used to position standoffs already connected to the D3. In some embodiments, the D3 may include standoffs which are pre-deployed or self-deploying and require no action by the UAV, such as rollers or spheres connected to the ends of various rungs on a D3. The standoffs may also be in the form of hemispheres, with each hemisphere arranged such that the flat side of the hemisphere is substantially parallel to a building face when the D3 is deployed and the spherical surface of the hemisphere contacts the building face when the D3 is deployed. IfD3 is a zipline, this step may not be required.

In 660, the D3 is tensioned. Preferably, the D3 is tensioned to a load higher than the anticipated working load to proof-test the D3 installation. If the tensioned D3 holds, then rescue may be initiated. If the D3 cannot be safely tensioned due, for example, to a faulty anchor or slipping standoff, the D3 placement may be attempted again, perhaps at a different location. In such cases, 610 through 660 may need to be performed again.

In 665, the rescuees may self-rescue by climbing down the installed D3. In some scenarios, ground personnel may climb up the installed D3 to assist stranded or injured rescuees.

In 670, the UAV may be used to recover the deployed D3 after the rescuees have been evacuated. This step is, of course, optional, and may not be practical if doing so exposes the UAV to risk.

Fig. 7 depicts a similar process to that depicted in Fig. 6, but features an embodiment utilizing a sectioned D3. 705 through 725 are similar to 605 through 625 in Fig. 6; the reader is referred to the description of Fig. 6 for discussion of these operations. The chief difference between 705 through 725 of Fig. 7 and their analogues in Fig. 6 is that the D3 featured in these steps of Fig. 7 is the initial section of a sectioned D3.

In 730, which begins after the initial D3 section has been attached to the anchor point, a D3 extension section is loaded onto the UAV. In some embodiments, multiple UAVs may be used simultaneously allow performance of the technique depicted in Fig. 7 to be accelerated. For example, a first UAV may be used to deliver the D3 as described in 720 while a second UAV may be loaded with the D3 extension section.

In 735, the D3 extension section is delivered by the UAV to the lower end of the deployed D3. In 740, the UAV connects the delivered extension section to the lower end of the D3. In 740, the D3 extension section is deployed.

In 750, an evaluation is made as to whether the assembled D3 is of sufficient length. If not, the technique returns to 730 and begins again with a new D3 extension section. If so, the technique continues on to 755 through 770, which mirror 655-670 in Fig. 6.

For the avoidance of doubt, the present application is directed to the subject-matter described in the following numbered paragraphs:
1. A method comprising:
   delivering a first deployable descent device to an elevated first location with an unmanned aerial vehicle (UAV), the first deployable descent device having a first end and a second end;
   anchoring the first end of the first deployable descent device to a feature at the elevated first location by the UAV; and
   deploying the first deployable descent device such that the second end of the first deployable descent device is at a lower altitude than the first end of the first deployable descent device after deployment.
2. The method of paragraph 1, further comprising:
   anchoring the second end of the first deployable descent device to a second location at a lower altitude than the altitude of the elevated first location; and
   inducing a tensile load in the first deployable descent device between the first end and the second end in addition to any tensile load attributable to the weight of the first deployable descent device.
3. The method of paragraph 2, further comprising:
   providing two or more standoffs configured to offset the first deployable descent device from a surface across a substantial portion of the first deployable descent device, wherein the surface is located between the elevated first location and the second location; and
   offsetting the first deployable descent device from the surface with the standoffs.
4. The method of paragraph 1, further comprising:
   equipping the UAV with a second deployable descent device, the second deployable descent device having a first end and a second end;
   delivering the second deployable descent device to the second end of the first deployable descent device with the UAV;
   attaching the first end of the second deployable descent device to the second end of the first deployable descent device by the UAV; and
   deploying the second deployable descent device such that the second end of the second deployable descent device is at a lower altitude than the first end of the second deployable descent device after deployment.
5. The method of paragraph 1, further comprising:
   retrieving the first deployable descent device from the elevated first location after the first deployable descent device has been anchored to the elevated first location, wherein the retrieving is performed by the UAV.
6. A system comprising:
   a first deployable descent device, the first deployable descent device having a first end and a second end; and
   an unmanned aerial vehicle (UAV), the UAV configured to provide for delivery of the first deployable descent device to an elevated first location and anchoring of the first end of the first deployable descent device to the elevated first location.
7. The system of paragraph 6, the UAV further configured to provide for anchoring of the second end of the first deployable descent device to a second location at a lower altitude than the elevated first location.
8. The system of paragraph 7, the UAV further configured to provide for inducement of a tensile load in the first deployable descent device in addition to any tensile load attributable to the weight of the first deployable descent device.
9. The system of paragraph 7, further comprising two or more standoffs configured to offset the first deployable descent device from a surface across a substantial portion of the first deployable descent device when the first deployable descent device is anchored to the elevated first location and the second location and wherein the surface is located between the elevated first location and the second location.
10. The system of paragraph 6, further comprising:
   a second deployable descent device, the second deployable descent device having a first end and a second end,
   wherein the UAV is further configured to provide for delivery of the second deployable descent device to the second end of the first deployable descent device after the first deployable descent device has been anchored to the elevated first location and for attaching of the first end of the second deployable descent device to the second end of the first deployable descent device.
11. The system of paragraph 6, wherein the UAV is further configured to provide for deployment of the first deployable descent device after the first deployable descent device has been anchored to the elevated first location.
12. The system of paragraph 6, wherein the UAV is further configured to retrieve the first deployable descent device after the first deployable descent device has been anchored to the elevated first location.
13. The system of paragraph 9, wherein the first deployable descent device includes a plurality of rungs and wherein the standoffs comprise radially-symmetric spacers mounted onto selected rungs in the plurality of rungs.
14. The system of paragraph 13, wherein each radially-symmetric spacer is substantially radially centered on the rung onto which the radially-symmetric spacer is mounted.
15. The system of paragraph 9, wherein the first deployable descent device comprises two or more risers spanning between the first end and the second end of the first deployable descent device, wherein the standoffs comprise a plurality of rungs, wherein each rung in the plurality of rungs is configured to:
   span between the two or more risers,
   provide a substantially flat stepping surface substantially normal to the two or more risers when the first deployable descent device is anchored to the elevated first location and the second location, and
   offset the two or more risers from the surface when the first deployable descent device is anchored to the elevated first location and the second location.
16. A deployable descent device comprising:
   unmanned aerial vehicle (UAV) interface features, wherein the UAV interface features are configured to:
      allow the deployable descent device to be removably mounted to a mating delivery interface on a UAV, and
      support the deployable descent device during delivery to the elevated first location by the UAV;
   two or more risers;
   a plurality of rungs, each rung spanning between the two or more risers;
   a plurality of standoffs, each standoff connected with a rung or a riser;
   a first end; and
   a second end,
      wherein the first end is configured to be anchored to an elevated first location, and
      wherein the second end is configured to be anchored to a second location or connected to a chain of one or more other deployable descent devices sequentially connected with one another.
17. The deployable descent device of paragraph 16, wherein the standoffs comprise radially-symmetric spacers mounted onto selected rungs in the plurality of rungs, wherein each radially-symmetric spacer is substantially radially centered on the rung onto which the radially-symmetric spacer is mounted.
18. The system of paragraph 17, wherein each radially-symmetric spacer is substantially radially centered on the rung onto which the radially-symmetric spacer is mounted.
19. The deployable descent device of paragraph 16, wherein the standoffs include an interface material, the interface material selected from the group including rubbers, adhesives, and adhesive tapes, and wherein the interface material forms contact patches between the standoffs and a surface when the deployable descent device is anchored to an elevated first location and a second location and wherein the surface is located between the elevated first location and the second location.
20. The deployable descent device of paragraph 16, wherein the each standoff is integrated into the rung with which it is connected, and wherein each rung in the plurality of rungs is configured to:
   provide a substantially flat stepping surface substantially normal to the two or more risers when the deployable descent device is anchored to the elevated first location and the second location, and
   offset the two or more risers from a surface when the deployable descent device is anchored to the elevated first location and the second location, wherein the surface is located between the elevated first location and the second location.
21. The deployable descent device of paragraph 16, further comprising one or more tensioning devices, the one or more tensioning devices configured to provide for the inducement of a tensile load in the one or more risers when the deployable descent device is anchored to the elevated first location and the second location, wherein the tensile load is in addition to any tensile load generated due to gravity.

Although several embodiments of this invention have been described in detail herein with reference to the accompanying drawings, it is to be understood that the invention is not limited to these precise embodiments, and that various changes and modifications may be effected therein by one skilled in the art without departing from the scope of spirit of the invention as defined in the appended claims.

## Claims

1. A deployable descent device comprising:
unmanned aerial vehicle (UAV) interface features, wherein the UAV interface features are configured to:
allow the deployable descent device to be removably mounted to a mating delivery interface on a UAV, and
support the deployable descent device during delivery to the elevated first location by the UAV;
two or more risers;
a plurality of rungs, each rung spanning between the two or more risers;
a plurality of standoffs, each standoff connected with a rung or a riser;
a first end; and
a second end,
wherein the first end is configured to be anchored to an elevated first location, and
wherein the second end is configured to be anchored to a second location or connected to a chain of one or more other deployable descent devices sequentially connected with one another.

2. The deployable descent device of claim 1, wherein the standoffs comprise radially-symmetric spacers mounted onto selected rungs in the plurality of rungs, wherein each radially-symmetric spacer is substantially radially centered on the rung onto which the radially-symmetric spacer is mounted, optionally wherein each radially-symmetric spacer is substantially radially centered on the rung onto which the radially-symmetric spacer is mounted.

3. The deployable descent device of claim 1, wherein:
(a) the standoffs include an interface material, the interface material selected from the group including rubbers, adhesives, and adhesive tapes, and wherein the interface material forms contact patches between the standoffs and a surface when the deployable descent device is anchored to an elevated first location and a second location and wherein the surface is located between the elevated first location and the second location; or
(b) the each standoff is integrated into the rung with which it is connected, and wherein each rung in the plurality of rungs is configured to:
provide a substantially flat stepping surface substantially normal to the two or more risers when the deployable descent device is anchored to the elevated first location and the second location, and
offset the two or more risers from a surface when the deployable descent device is anchored to the elevated first location and the second location, wherein the surface is located between the elevated first location and the second location.

4. The deployable descent device of claim 1, further comprising one or more tensioning devices, the one or more tensioning devices configured to provide for the inducement of a tensile load in the one or more risers when the deployable descent device is anchored to the elevated first location and the second location, wherein the tensile load is in addition to any tensile load generated due to gravity.

5. A system comprising:
a first deployable descent device, the first deployable descent device having a first end and a second end; and
an unmanned aerial vehicle (UAV), the UAV configured to provide for delivery of the first deployable descent device to an elevated first location and anchoring of the first end of the first deployable descent device to the elevated first location.

6. The system of claim 5, the UAV further configured to provide for anchoring of the second end of the first deployable descent device to a second location at a lower altitude than the elevated first location.

7. The system of claim 6, the UAV further configured to provide for inducement of a tensile load in the first deployable descent device in addition to any tensile load attributable to the weight of the first deployable descent device.

8. The system of claim 6, further comprising two or more standoffs configured to offset the first deployable descent device from a surface across a substantial portion of the first deployable descent device when the first deployable descent device is anchored to the elevated first location and the second location and wherein the surface is located between the elevated first location and the second location.

9. The system of claim 5, further comprising:
a second deployable descent device, the second deployable descent device having a first end and a second end,
wherein the UAV is further configured to provide for delivery of the second deployable descent device to the second end of the first deployable descent device after the first deployable descent device has been anchored to the elevated first location and for attaching of the first end of the second deployable descent device to the second end of the first deployable descent device.

10. The system of claim 5, wherein the UAV is further configured to (i) provide for deployment of the first deployable descent device after the first deployable descent device has been anchored to the elevated first location, or (ii) retrieve the first deployable descent device after the first deployable descent device has been anchored to the elevated first location.

11. The system of claim 8, wherein the first deployable descent device includes a plurality of rungs and wherein the standoffs comprise radially-symmetric spacers mounted onto selected rungs in the plurality of rungs, optionally wherein each radially-symmetric spacer is substantially radially centered on the rung onto which the radially-symmetric spacer is mounted.

12. The system of claim 8, wherein the first deployable descent device comprises two or more risers spanning between the first end and the second end of the first deployable descent device, wherein the standoffs comprise a plurality of rungs, wherein each rung in the plurality of rungs is configured to:
span between the two or more risers,
provide a substantially flat stepping surface substantially normal to the two or more risers when the first deployable descent device is anchored to the elevated first location and the second location, and
offset the two or more risers from the surface when the first deployable descent device is anchored to the elevated first location and the second location.

13. A method comprising:
delivering a first deployable descent device to an elevated first location with an unmanned aerial vehicle (UAV), the first deployable descent device having a first end and a second end;
anchoring the first end of the first deployable descent device to a feature at the elevated first location by the UAV; and
deploying the first deployable descent device such that the second end of the first deployable descent device is at a lower altitude than the first end of the first deployable descent device after deployment.

14. The method of claim 1, further comprising:
anchoring the second end of the first deployable descent device to a second location at a lower altitude than the altitude of the elevated first location; and
inducing a tensile load in the first deployable descent device between the first end and the second end in addition to any tensile load attributable to the weight of the first deployable descent device; optionally further comprising: providing two or more standoffs configured to offset the first deployable descent device from a surface across a substantial portion of the first deployable descent device, wherein the surface is located between the elevated first location and the second location; and
offsetting the first deployable descent device from the surface with the standoffs.

15. The method of claim 1, further comprising:
equipping the UAV with a second deployable descent device, the second deployable descent device having a first end and a second end;
delivering the second deployable descent device to the second end of the first deployable descent device with the UAV;
attaching the first end of the second deployable descent device to the second end of the first deployable descent device by the UAV; and
deploying the second deployable descent device such that the second end of the second deployable descent device is at a lower altitude than the first end of the second deployable descent device after deployment.
